(19) **Europäisches Patentamt**

**European Patent Office**

**Office européen des brevets**

(11) Veröffentlichungsnummer : **0 438 790 B1**

(12) ## EUROPÄISCHE PATENTSCHRIFT

(45) Veröffentlichungstag der Patentschrift :
**19.01.94 Patentblatt 94/03**

(51) Int. Cl.$^5$ : **C01G 15/00, B01D 61/40**

(21) Anmeldenummer : **90125593.5**

(22) Anmeldetag : **27.12.90**

(54) **Verfahren zur Abtrennung und Aufkonzentrierung von Gallium aus einer wässrigen Lösung, die Gallium zusammen mit Aluminium, Zink und/oder Kupfer enthält.**

(30) Priorität : **19.01.90 LU 87662**

(43) Veröffentlichungstag der Anmeldung :
**31.07.91 Patentblatt 91/31**

(45) Bekanntmachung des Hinweises auf die
Patenterteilung :
**19.01.94 Patentblatt 94/03**

(84) Benannte Vertragsstaaten :
**AT BE CH DE DK ES FR GB GR IT LI LU NL SE**

(56) Entgegenhaltungen :
**GB-A- 991 614
US-A- 4 360 448
US-A- 4 775 479**

(56) Entgegenhaltungen :
**COMPTES RENDUS DE L'ACADEMIE DES
SCIENCES PARIS, Teil 292, 6. April 1987, Serie
II, Seiten 1019-1022; D. BAUER et al.: "CHIMIE
ANALYTIQUE. - Existence d'un microémulsion
dans les systèmes d'extraction du gallium par
la beta-dodécényl-7 hydroxy-8 quinoléine dite
"Kelex 100""
CHEMICAL ABSTRACTS, Band 106, 1987,
Seite 224, Zusammenfassung no. 217452r, Columbus, Ohio, US.**

(73) Patentinhaber : **EUROPÄISCHE
WIRTSCHAFTSGEMEINSCHAFT (E.W.G.)
Bâtiment Jean Monnet, Plateau du Kirchberg
L-2920 Luxemburg (LU)**

(72) Erfinder : **Kirgios, Ioannis, Dr.
Erlenweg 7
W-5047 Wesseling (DE)**
Erfinder : **Schügerl, Karl, Prof. Dr.
Arnumer Kirchstrasse 31
W-3005 Hemmingen 4 (DE)**
Erfinder : **Degener, Wolfgang, Dr.
Sieben Hügel 5
W-4800 Bielefeld (DE)**

(74) Vertreter : **Weinmiller, Jürgen
Lennéstrasse 9 Postfach 24
D-82336 Feldafing (DE)**

EP 0 438 790 B1

Jouve, 18, rue Saint-Denis, 75001 PARIS

## Beschreibung

Die Erfindung betrifft ein Verfahren zur Abtrennung und Aufkonzentrierung von Gallium aus wäßrigen Lösungen, die Gallium zusammen mit Aluminium, Zink und/oder Kupfer enthalten, durch Reaktionsextraktion mittels Flüssigmembranemulsionen, das die Erzeugung konzentrierter Galliumlösungen hoher Reinheit, die mehr als 10 g/l Gallium als Galliumhalogenid enthalten, aus galliumhaltigen Ausgangslösungen mit nicht mehr als 5 g/l Gallium erlaubt.

Hochreines Gallium und Galliumverbindungen finden hauptsächlich in der Elektronikindustrie zunehmende Anwendung. Als Halbleiterwerkstoffe haben sich dotiertes Galliumarsenid, Galliumphosphid und Galliumarsenidphosphit als besonders geeignet erwiesen. Weiterhin kann Galliumarsenid bei der Konstruktion von Lasern und Solarzellen eingesetzt werden. Eine weitere Einsatzmöglichkeit bietet sich in der in Entwicklung befindlichen Anwendung von Supraleitern auf Galliumbasis.

Gallium kommt in den zur Verfügung stehenden Mineralien in nur sehr geringer Konzentration von 0,001% (Bauxit) bis maximal 1,8% (Germanit) vor. Es ist zumeist mit Zink, Aluminium und/oder Kupfer vergesellschaftet. Die geringen Konzentrationen der Erze stellen an ein Verfahren zur Gewinnung von Gallium daher besondere Ansprüche bezüglich der Selektivität der Stofftrennung und der Möglichkeit einer Aufkonzentrierung.

Gallium fällt bei der Aufarbeitung von Bauxit sowie Zink und Germanium enthaltenden Erzen an (vgl. "Ullmanns Encyklopädie der Technischen Chemie", Band 11 (1986), S. 753). Die Galliumabtrennung und Aufkonzentrierung erfolgt im allgemeinen im sogenannten Pechiney-, Alcoa- oder Reynolds-Prozeß (vgl. US-PS 3 890 427). Alle diese Prozesse beruhen auf der Abtrennung des Aluminiums durch Fällung. Aus den verbleibenden Lösungen werden das Gallium und Reste des Aluminiums mittels Kohlendioxid als Hydroxide gefällt. Das Aluminium und Gallium enthaltende Hydroxid wird in Natronlauge gelöst und der Elektrolyse zugeführt. Des weiteren fällt eine Gallium in geringer Konzentration enthaltene Lösung als Kreislauflauge des Bayer-Prozesses an.

Die hydrometallurgische Abtrennung des Galliums erfolgt bisher aus salzsauren Lösungen durch Flüssig-Flüssig-Extraktion (vgl. M.L. Good, F.F. Holland, "J. Inorg. Nucl. Chem.", 26 (1964), Seite 321, und T. Sato, T. Nakamura, S. Ishikawa, "Solv. Extr. I. Exch. "2 (1984), Seite 2019). Es ist auch bereits bekannt, für die Extraktion von Gallium Tributylphosphat, Triarylphosphin, Trioctylphosphinoxid, Kronenäther oder Dihexylsulfid als Extraktionsmittel zu verwenden (vgl. V.P. Judin, R.G. Bautista, "Metall. Trans. B.", 17B (2), 1986, Seite 259; A.M. Reznik, L.A. Zekel, "Zh Neorg. Khim." 24 (4), 1979, Seite 1025; Y. Amashji, T. Matsushita, M. Wada, T. Shono, "Chem. Lett." 1 (1988), Seite 43; Y. Hasegawa, T. Shimada, M. Niitsu, "J. Inorg. Nucl. Chem." 42 (10), 1980, Seite 1487; H. Koshima, H. Onishi, "Analyst (London)" 111 (11) (1986), 1261; und Y. Baba, H. Nakamura, K. Inoue, "J. Chem. Eng. Jpn." 19 (6), 1986, Seite 497).

Die damit erzielbaren Ausbeuten an hochreinem Gallium sind jedoch unzureichend, insbesondere ist die vollständige Abtrennung von Aluminium, Zink oder Kupfer ungenügend, wenn diese in hohem Überschuß gegenüber Gallium vorliegen.

Aufgabe der Erfindung war es daher, ein Verfahren zu finden, mit dessen Hilfe es möglich ist, Gallium aus wäßrigen Lösungen, die Gallium zusammen mit Aluminium, Zink und/oder Kupfer enthalten, auf noch wirksamere Weise abzutrennen und aufzukonzentrieren.

Es wurde nun gefunden, daß diese Aufgabe erfindungsgemäß gelöst werdem kann durch die Abtrennung und Aufkonzentrierung des Galliums in einem multiplen Emulsionssystem unter Verwendung von sekundären Aminen als selektiv transportierender Reaktionskomponente. Das heißt, wenn die Aluminium und Gallium neben anderen Schwermetallen enthaltenden Hydroxide (beispielsweise aus der Bauxitaufarbeitung nach Pechiney) oder Erze mit salzsaurer Lösung gelaugt werden, kann eine Galliumabtrennung und Aufkonzentrierung durchgeführt werden durch Reaktionsextraktion mittels Flüssigmembranemulsionen. Dabei erhält man konzentrierte Galliumlösungen mit hoher Reinheit.

Dieses Verfahren umfaßt eine Kombination der folgenden Maßnahmen:

a) galliumhaltige Lösungen werden mit Salzsäure angesäuert bzw. galliumhaltige Rückstände werden in Salzsäure aufgelöst,

b) die Extraktion erfolgt aus Lösungen mit mindestens 4, vorzugsweise 4 bis 6 Mol/l Salzsäure,

c) für die Extraktion wird eine ein sekundäres Amin und ein säurebeständiges oligomeres und nichtionisches Tensid mit einem HLB >3 und einer Molmasse >400 g/Mol, vorzugsweise Polyisobutylen-Polybernsteinsäureanhydrid-Polyamin enthaltende Wasser-in-Öl-Emulsion (W/O-Emulsion) in einem Extraktor in der galliumhaltigen Lösung dispergiert, wobei ein Volumenverhältnis von galliumhaltiger salzsaurer Lösung zu W/O-Emulsion von 30:1 bis 10:1 gewählt wird.

d) die W/O-Emulsion wird aus einem vorwiegend aliphatischen Lösungsmittel mit hohem Flammenpunkt, vorzugsweise Kerosin, mit dem gelösten sekundären Amin und Polyamin und Wasser mit einer Wasserstoffionenkonzentration $\leqq$ 0,01 Mol/l im Volumenverhältnis 2:3 bis 3:2 in einem Homogenisator hergestellt,

e) die W/O -Emulsion wird von der von Gallium befreiten Lösung abgetrennt und in einem elektrischen Wechselfeld mit 0,5-8 kV/cm als Feldstärke und einer Frequenz >50 Hz zwischen zwei zweifach isolierten, koaxialen Elektroden gespalten, und

f) die freigesetzte, galliumreiche Wasserphase wird abgetrennt und die regenerierte organische Phase mit unbeladenem oder teilbeladenem Wasser mit einer Wasserstoffionenkonzentration <0,01 Mol/l wird erneut emulgiert.

Gegenstand der Erfindung ist ein Verfahren zur Abtrennung und Aufkonzentrierung von Gallium aus einer wäßrigen Lösung, die Gallium zusammen mit Aluminium, Zink und/oder Kupfer enthält, das durch die Kombination der folgenden Merkmale gekennzeichnet ist:

a) Herstellung einer Wasser-in-Öl-Emulsion (W/O-Emulsion) aus einer neutralen oder alkalischen wäßrigen Phase und einer eine öllösliche Reaktionskomponente mit einem sekundären Amin enthaltenden organischen Phase in einem Homogenisator in einem Volumenverhältnis von wäßriger Phase zu organischer Phase von 2:3 bis 3:2,

b) Dispergieren der W/O-Emulsion in der Gallium enthaltenden wäßrigen Lösung, die auf mindestens 4 Mol/l HCl eingestellt worden ist, in einem Extraktor in einem Volumenverhältnis von wäßriger Lösung zu W/O-Emulsion von 30:1 bis 10:1 bis zur Erzielung von W/O-Emulsions-Tröpfchen mit einem Durchmesser von ≦1 mm;

c) Abtrennung der W/O-Emulsion von dem wäßrigen Kontinuum und Durchführung einer Emulsionsspaltung in einem Reaktor mit koaxialen, zweifach isolierten Elektroden in einem angelegten Hochspannungswechselfeld mit einer Feldstärke von mindestens 0,5 kV/cm und einer Frequenz von mehr als 50 Hz unter Rückführung des ungespaltenen Anteils der W/O-Emulsion in die Stufe (b),

d) Abtrennung der elektrokoaleszierten organischen Phase der W/O-Emulsion in einem Gravitationsabscheider und Rückführung derselben in die Stufe (a).

Wahlweise erfolgt die Weiterverarbeitung der elektrokoaleszierten galliumhaltigen wäßrigen Abstreifphase der W/O-Emulsion durch Solventextraktion, Rückextraktion mit Wasser oder einer Natriumhydroxidlösung und Elektrolyse der dabei erhaltenen wäßrigen Lösung zur Gewinnung von Gallium sowie ggfs. Zonenschmelzen zur weiteren Reinigung derselben.

Mit den Laugungslösungen des Bayer-Prozesses sind für eine hydrometallurgische Galliumgewinnung gemäß der vorliegenden Erfindung ideale Lösungen vorgegeben. Es können aber auch salzsaure Laugungslösungen galliumhaltiger Erze erfindungsgemäß verarbeitet werden. Durch Verwendung einer speziellen Flüssigmembranemulsion gemäß der Erfindung kann Gallium auch bei hohen Überschüssen von Aluminium, Zink und/oder Kupfer mit guter Selektivität abgetrennt und durch anschließende Elektrolyse und Zonenschmelzen gereinigt werden.

Die erfindungsgemäße Verwendung einer speziell komponierten W/O-Emulsion als disperse Phase eines extraktionsanalogen Prozesses ermöglicht eine simultane Extraktion und Aufkonzentrierung von Gallium als anionischer Halogenidkomplex (vgl. die weiter unten folgenden Beispiele 1 und 3). Das Gallium kann von Aluminium vollständig abgetrennt werden. Auch bei 40-fachem Überschuß von Zink oder Kupfer wird Gallium bevorzugt transportiert (vgl. die weiter unten folgenden Beispiele 3, 4 und 5).

Typische Ausgangslösungen weisen einen Galliumgehalt von 100 bis 300 ppm und einen Zinkgehalt von 5 bis 6 g/l neben anderen Elementen auf. In der letzten Verfahrensstufe des erfindungsgemäßen Prozesses ergibt sich somit eine mehr als 10 g/l Gallium als Galliumhalogenid enthaltende Lösung. Die in dem erfindungsgemäßen Prozeß eingesetzten organischen Reaktionskomponenten und Lösungsmittel können mit hoher Ausbeute zurückgewonnen und dem Prozeß wieder zugeführt werden.

Bevorzugte Ausgestaltungen des erfindungsgemäßen Verfahrens ergeben sich aus den Unteransprüchen.

Die Erfindung wird nachstehend unter Bezugnahme auf die beiliegenden Zeichnungen näher erläutert, ohne jedoch darauf beschränkt zu sein. Es zeigen:

Figur 1              eine schematische Darstellung der Herstellung der erfindungsgemäß verwendeten W/O-Emulsion in der Stufe (a) des erfindungsgemäßen Verfahrens;

Figur 2              eine schematische Darstellung des Ablaufs des erfindungsgemäßen Extraktionsprozesses;

Figur 3a, 3b und 3c    eine schematische Darstellung einer Elektrokoaleszenzanlage, wie sie zur Durchführung der Stufe (c) des erfindungsgemäßen Verfahrens verwendbar ist, bzw. eine Darstellung der verwendbaren verschiedenen Reaktoren bzw. eine schematische Darstellung eines erfindungsgemäß verwendbaren Emulsionsspalters mit zusätzlicher Schlaufe zur Rückführung abgeschiedener Wasserphase;

Figur 4              die Galliumextraktion im multiplen Emulsionssystem gemäß der Erfindung bei variierender Carrier-Konzentration;

| | |
|---|---|
| Figur 5 | die Galliumextraktion gemäß der Erfindung bei variierender Säurekonzentration; |
| Figur 6 | die Galliumextraktion gemäß der Erfindung aus einer kupferhaltigen Lösung; |
| Figur 7 | die Galliumextraktion gemäß der Erfindung aus einer zinkhaltigen Lösung; |
| Figur 8a und 8b | die Selektivität und den Trennfaktor der Galliumextraktion gemäß der vorliegenden Erfindung; |
| Figur 9 | die Selektivität der Galliumextraktion aus der Abstreiflösung; |
| Figur 10 | den Verlauf der kontinuierlichen Emulsionsspaltung ohne Rückführung der koaleszierten Wasserphase; |
| Figur 11 | den Verlauf einer diskontiuierlichen Emulsionsspaltung; und |
| Figur 12 | den Verlauf einer kontinuierlichen Emulsionsspaltung mit und ohne Rückführung der koaleszierten wäßrigen Phase. |

In der vorliegenden Beschreibung der Erfindung und in den beiliegenden Zeichnungen werden die folgenden Abkürzungen und Definitionen verwendet:

bd     Anteil der abgespaltenen Wasserphase

bsm    mittlere Spaltungsgeschwindigkeit der Emulsion in ml/min

$c_i$     Konzentration in mg/kg

$F_V$     Volumenstrom in ml/min

$V_R$     Volumen in ml

$$\text{Restanteil } F = \frac{\text{Raffinatkonzentration}}{\text{Ausgangskonzentration}}$$

$$\text{Anreicherung:} \frac{\text{Konzentration in der Ausgangslösung}}{\text{Konzentration in der Emulsion}}$$

$$\text{Selektivität } S = \frac{(c_{Ga,0} - c_{Ga,t})}{(c_{Zn,0} - c_{Zn,t}) + (c_{Cu,0} - c_{Cu,t}) + (c_{Ga,0} - c_{Ga,t})}$$

Bei den erfindungsgemäß verwendeten Chemikalien handelt es sich um folgende:

Kerosin: Exsol D 80 der Firma Esso AG, Siedebereich 180 - 240°C, Aromatengehalt 1%

Paranox 100: Polyisobutylen-Bernsteinsäureanhydrid-Polyamin der Firma Exxon, Spezifikation: technisch, M 731 g/Mol, HLB >4

Paranox 107: Polyisobutylen-Bernsteinsäureanhydrid-Polyboran-Polyamin der Firma Exxon, Spezifikation: technisch, M 834 g/Mol, HLB >4

Amberlite LA-2: N-Lauryl-N-trialkylaminmethylamin der Firma Rohm &;Haas, Spezifikation; technisch, M 351 - 393 g/Mol

Span 80: Sorbitanmonooleat, Serva, Spezifikation: technisch, M 428 g/Mol, HLB ~ 4,3

Acorga P 5100: 5-Nonyl-Salicylaldoxin, Acorga Corp. Ltd., Spezifikation: technisch, M unbekannt.

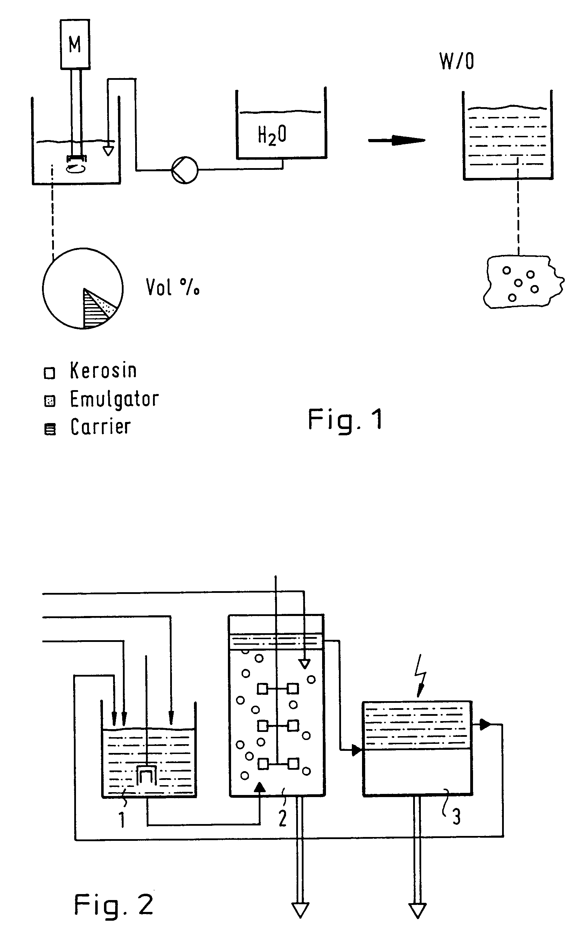

Bei der praktischen Durchführung des erfindungsgemäßen Verfahrens wird in einer ersten Verfahrensstufe, die in Figur 1 dargestellt ist, aus einer mit einem sekundären Amin (z.B. Amberlite LA-2) und einem nichtionischen Tensid (z.B. Paranox 100 oder Paranox 107) dotierten organischen Phase und einer neutralen oder alkalischen Wasserphase eine W/O-Emulsion hergestellt.

Der Emulgierung 1 folgt (siehe Figur 2) ein Extraktor 2, in dem die Emulsion in einer galliumhaltigen Lösung dispergiert wird, die zuvor auf einen Säuregehalt von mindestens 4 Mol/l HCl, vorzugsweise 4 bis 6 Mol/l HCl, eingestellt worden ist. Die Emulsion wird so dispergiert, daß sich Emulsionströpfchen mit einem Durchmesser von maximal 1 mm ergeben.

Nach einer Verweilzeit von maximal 4 Minuten im Extraktor wird die W/O-Emulsion vom wäßrigen Kontinuum getrennt und der Emulsionsspaltung 3 zugeführt.

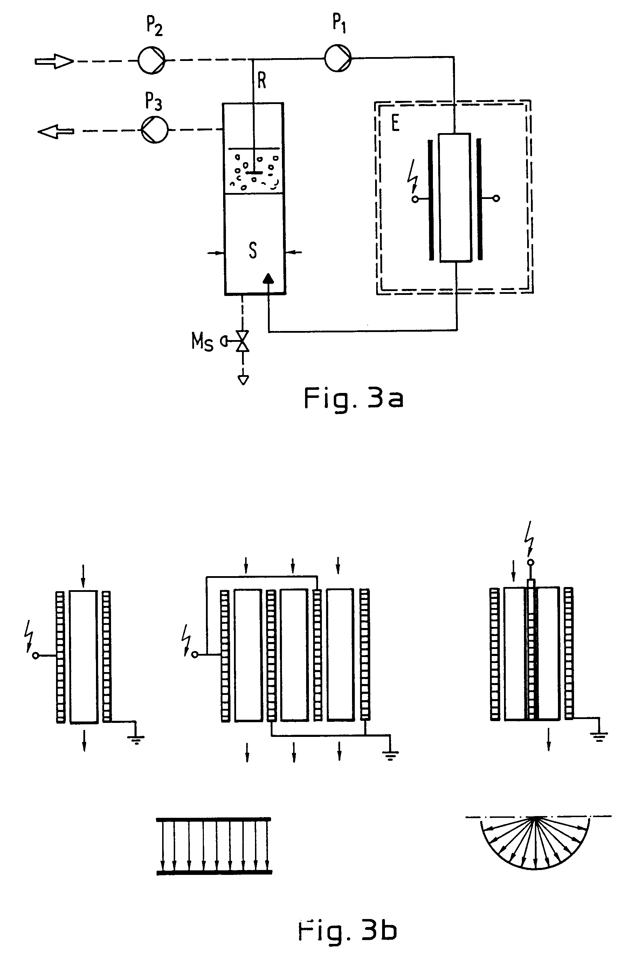

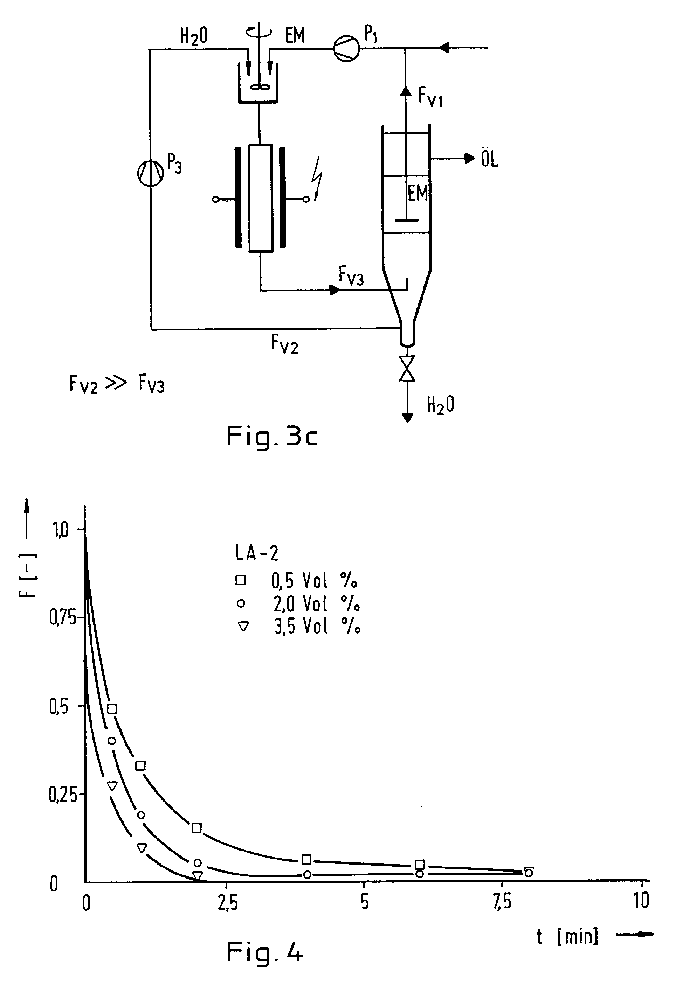

Die Emulsionsspaltung wird elektrostatisch induziert und mit Wechselspannungsfeldern mit einer Feldstärke von mindestens 0,5 kV/cm und einer Frequenz von >50 Hz, vorzugsweise ≧1 kHz in einem Reaktor mit koaxialen, zweifach isolierten Elektroden durchgeführt. Der Reaktor ist durchschlagfest und weist eine Rückführung für ungespaltene Emulsion und wahlweise eine Rückführung für einen Anteil der koaleszierten Wasserphase zum Zwecke der Koaleszenzbeschleunigung auf (vgl. Figur 3). Die Volumenströme der frischen Emulsion, der Rückführung der ungespaltenen Emulsion und der koaleszierten Wasserphase sind wie 1:1:0,01 bis 1:10:0,5 zu wählen.

Nach der Spaltung der W/O-Emulsion kann die konzentrierte galliumhaltige Abstreifphase der Emulsion weiterverarbeitet werden.

Die organische Phase der Emulsion wird der Emulsionsherstellung wieder zugeführt und erneut emulgiert (vgl. das weiter unten folgende Beispiel 7).

Die Selektivität der Extraktion kann durch einen zweistufigen Prozeß drastisch erhöht werden. Die Verweildauer der Emulsion im Extraktor wird erhöht, bis die Abstreifphase ebenfalls 4 Mol/l HCl aufweist, wobei dieser Zustand nach 8 Minuten eintritt.

Aus der durch Elektrokoaleszenz erhaltenen galliumhaltigen Abstreiflösung kann dann mit einer den obengenannten Carrier enthaltenen, organischen Phase eine Solventextraktion durchgeführt werden. Für die Rückextraktion wird Wasser oder eine wäßrige Natriumhydroxidlösung verwendet. Die Selektivität der Extraktion erreicht dadurch einen Wert von 0,95 (vgl. das weiter unten folgende Beispiel 6).

Die Erfindung wird durch die folgenden Beispiele näher erläutert, ohne jedoch darauf beschränkt zu sein.

In allen Beispielen enthielten die vorgelegten Laugungslösungen, wenn nichts anderes angegeben ist, 160 ppm Gallium (Ga) und 6 Mol/l HCl. Es wurde ein Phasenvolumenverhältnis von galliumhaltiger Laugungslösung zu W/O-Emulsion von 20:1 eingestellt. Die Extraktion wurde in einem diskontinuierlichen Rührkessel mit Strömungsbrecher und Turbinenrührer durchgeführt. Die Phasen wurden mit 250 U/min des Rührers durchgemischt.

Dargestellt ist in allen Fällen, wenn nichts anderes angegeben ist, der Restanteil F gemäß der obigen Definition der extrahierbaren Metalle als Funktion der Kontaktzeit der Phasen.

Die Herstellung der erfindungsgemäß verwendeten W/O-Emulsion erfolgt gemäß Figur 1, in der bedeuten:

M =  Homogenisator (wahlweise Rotor/Stator oder statischer Homogenisator)
OP =  organische Phase
WP =  wäßrige Phase
d =  Durchmesser der emulgierten organischen Flüssigkeitströpfchen.

Der Ablauf des erfindungsgemäßen Verfahrens ist in Figur 2 schematisch dargestellt.

Die Figur 3a zeigt eine erfindungsgemäß verwendbare Elektrokoaleszenzanlage in schematischer Darstellung, worin bedeuten:

E =  Emulsionsspalter $V = 300$ cm³, $F_{Vmax} = 300$ ml/min
S =  Gravitationsabscheider $V = 1800$ cm³, Querschnittsfläche $A = 0,035$ m²
R =  Emulsionsrückführung
$P_1$ =  Emulsionsförderpumpe
$P_2$ =  Emulsionsumwälzpumpe
$P_3$ =  Förderpumpe für koaleszierte organische Phase
$M_S$ =  Ablaßventil für koaleszierte wäßrige Phase

Die Isolation des Emulsionsspalters bestand aus Rizinusöl und Glas (wahlweise PVDF = Polyvinylidenfluorid).

Figur 3b zeigt in dem erfindungsgemäßen Verfahren verwendbare Reaktoren zur Durchführung der Emulsionsspaltung, wobei erfindungsgemäß vorzugsweise ein Reaktor mit koaxialer Elektrodenanordnung (rechtes Bild) gewählt wird.

Figur 3c zeigt einen erfindungsgemäß verwendbaren Emulsionsspalter mit zusätzlicher Schlaufe zur Rückführung abgeschiedener Wasserphase, worin bedeuten:

EM =  Emulsion (W/O)
$F_{V1}$ =  Volumenstrom, frische Emulsion
$F_{V2}$ =  Volumenstrom, vorgespaltene Emulsion
$F_{V3}$ =  Volumenstrom, koaleszierte Dispers(Wasser)-Phase

## Beispiel 1

### Einfluß der Carrierkonzentration auf die Galliumextraktion

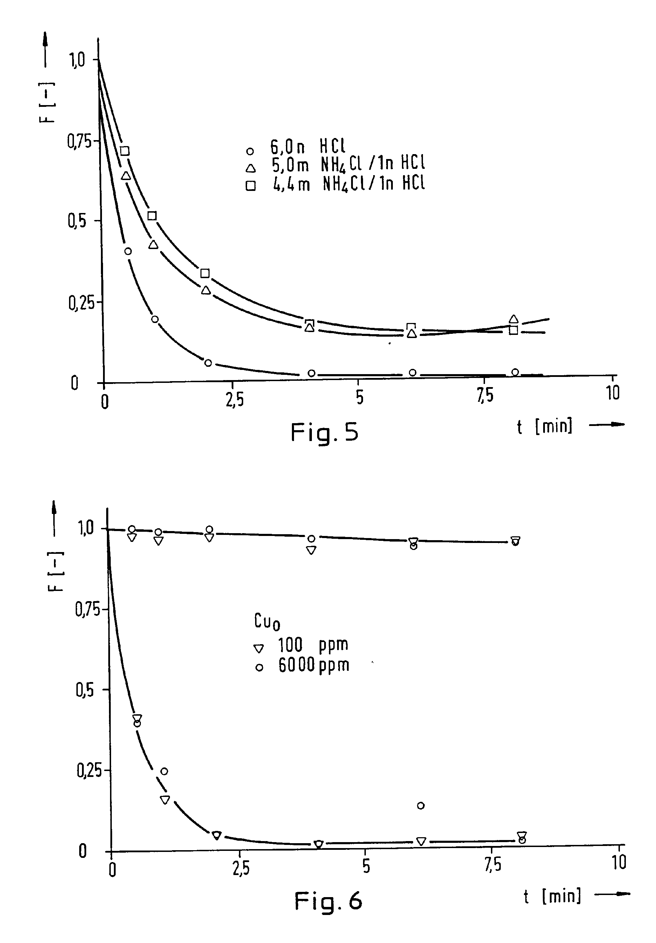

Die eingesetzte W/O-Emulsion bestand aus 0,9 Vol.% Paranox 100 und Amberlite LA-2 in der in Figur 4 angegebenen Konzentration und zum Rest aus Kerosin als organischer Phase sowie aus Wasser als kontinuierlicher Phase.

In Figur 4 sind die bei der Durchführung dieser Versuche erzielten Ergebnisse graphisch dargestellt.

## Beispiel 2

### Extraktion aus Lösungen mit verringertem Säuregehalt

Die erforderliche Chloridkonzentration wurde durch Zugabe von Ammoniumchlorid eingestellt. Der pH-Wert der Lösung wurde auf den Wert 0 eingestellt. Der Galliumrestanteil kann ebenfalls durch Extraktion stark vermindert werden.

Die eingesetzte W/O-Emulsion bestand zu 0,9 Vol.% aus Paranox 100, zu 2 Vol.% aus Amberlite LA-2 und zum Rest aus Kerosin als organischer Phase und aus Wasser als kontinuierlicher Phase.

Die bei der Durchführung dieser Versuche erzielten Ergebnisse sind in Figur 5 graphisch dargestellt.

Beispiel 3

Galliumextraktion aus kupferhaltiger Lösung

Die eingesetzte galliumhaltige Lösung enthielt zusätzlich 100 bzw. 6000 ppm Kupfer. Die Konzentration der Metalle nach 8-minütiger Extraktion wurde nach dem Spalten der W/O-Emulsion wie folgt ermittelt:

$$c_{0,Cu} = 100 \text{ ppm} \qquad c_{Ga} = 6000 \text{ ppm} \qquad \text{Anreicherung: } 37.5$$
$$c_{Cu} = 222 \text{ ppm} \qquad \text{Anreicherung: } 2.2$$

$$c_{0,Cu} = 6000 \text{ ppm} \qquad c_{Ga} = 6000 \text{ ppm} \qquad \text{Anreicherung: } 37.5$$
$$c_{Cu} = 7000 \text{ ppm} \qquad \text{Anreicherung: } 1.2$$

Die eingesetzte W/O-Emulsion bestand zu 0,9 Vol.% aus Paranox 100, zu 2 Vol.% aus Amberlite LA-2 und zum Rest aus Kerosin als organischer Phase und aus Wasser als kontinuierlicher Phase.

Die bei der Durchführung dieser Versuche erzielten Ergebnisse sind in Figur 6 graphisch dargestellt.

Beispiel 4

Galliumextraktion aus zinkhaltiger Lösung

Die eingesetzte galliumhaltige Lösung enthielt zusätzlich 6000 ppm Zink. Die Konzentration der Metalle wurde nach 8-minütiger Extraktion nach dem Spalten der W/O-Emulsion wie folgt ermittelt:

$$c_{0,Zn} = 6000 \text{ ppm} \qquad c_{Ga} = 6100 \text{ ppm} \qquad \text{Anreicherung: } 37.5$$
$$c_{Cu} = 2700 \text{ ppm} \qquad \text{Anreicherung: } 0.45$$

Die eingesetze W/O-Emulsion bestand zu 0,9 Vol.% aus Paranox 100, zu 2 Vol.% aus Amberlite LA-2 und zum Rest aus Kerosin als organischer Phase sowie aus Wasser als kontinuierlicher Phase.

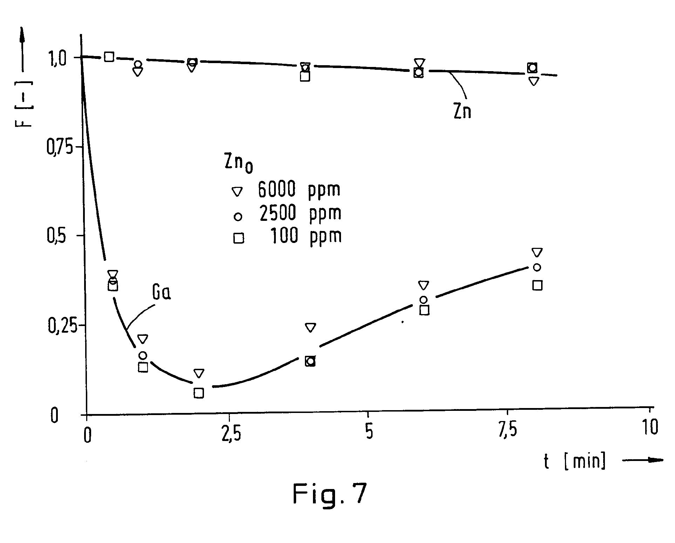

Die bei der Durchführung dieser Versuche erzielten Ergebnisse sind in Figur 7 graphisch dargestellt.

Beispiel 5

Selektivität der Galliumextraktion in Gegenwart von Zink und Kupfer im Überschuß

Wegen der mit zunehmender Extraktionszeit abnehmenden Selektivität des Transports wurde unter Berücksichtigung des Beispiels 1 eine maximale Kontaktzeit zwischen 2,5 und 4 min im Gegenstromextraktor gewählt.

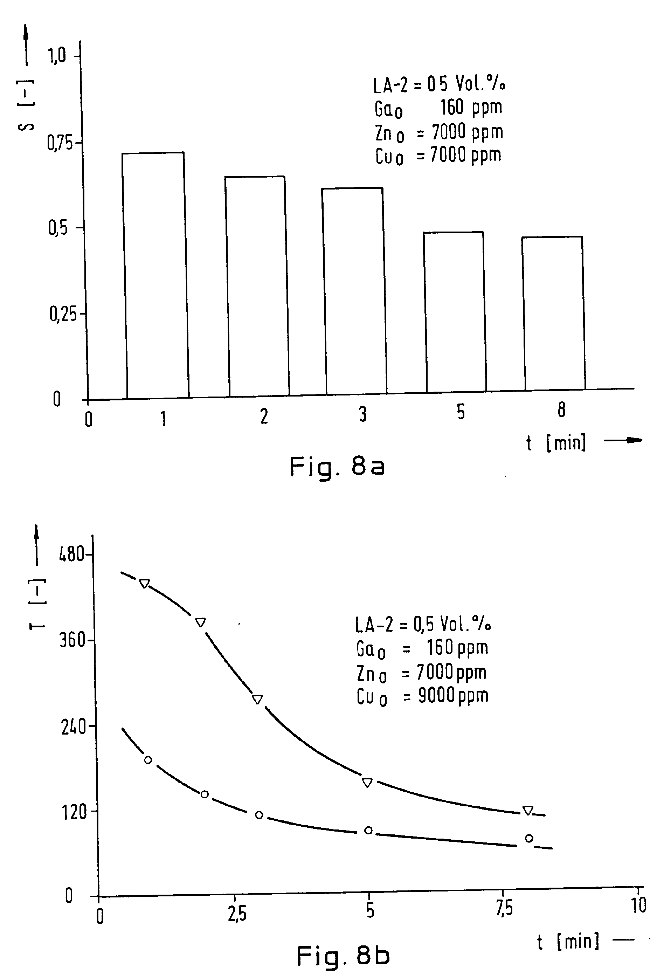

Die bei der Durchführung dieser Versuche erzielten Ergebnisse sind in den Figuren 8a und 8b dargestellt, wobei erstere die Selektivität und letztere den Trennfaktor jeweils abhängig von der Zeit zeigt. Die obere Kurve in Figur 8b bezieht sich auf Kupfer, die untere auf Zink.

Beispiel 6

Selektivität der Galliumextraktion aus der freigesetzten Abstreifphase der W/O-Emulsion

Gallium wurde aus einer mit Gallium angereicherten Abstreiflösung mit Selektivitäten >95% extrahiert.

Die Ausgangskonzentrationen an Zink und Kupfer betrugen jeweils 120 ppm.

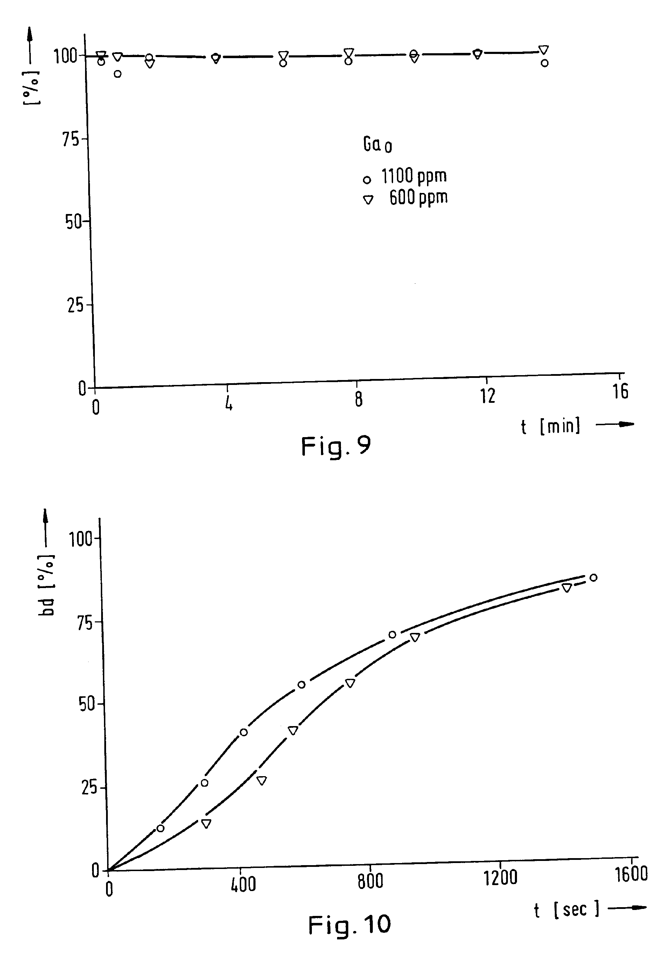

Die bei der Durchführung dieser Versuche erzielten Ergebnisse sind in der Figur 9 graphisch dargestellt, wobei die Selektivität über der Zeit aufgetragen ist.

6

Beispiel 7

Regenerierung der organischen Phase der W/O-Emulsion durch Elektrokoaleszenz

Verwendeter Reaktor: $V_r$ = 300 ml, koaxiale Elektroden aus Aluminium
Isolation: Rizinusöl, Glas, Isolationsdicke < 3 mm
Verwendete W/O-Emulsion: 0,9 Vol.% Paranox 100, 2 Vol.% Amberlite LA-2, Rest Kerosin als organische Phase in Wasser als kontinuierlicher Phase
Parameter: $F_V$ = 130 ml/min (Emulsion), 1 kV/cm, 1 kHz

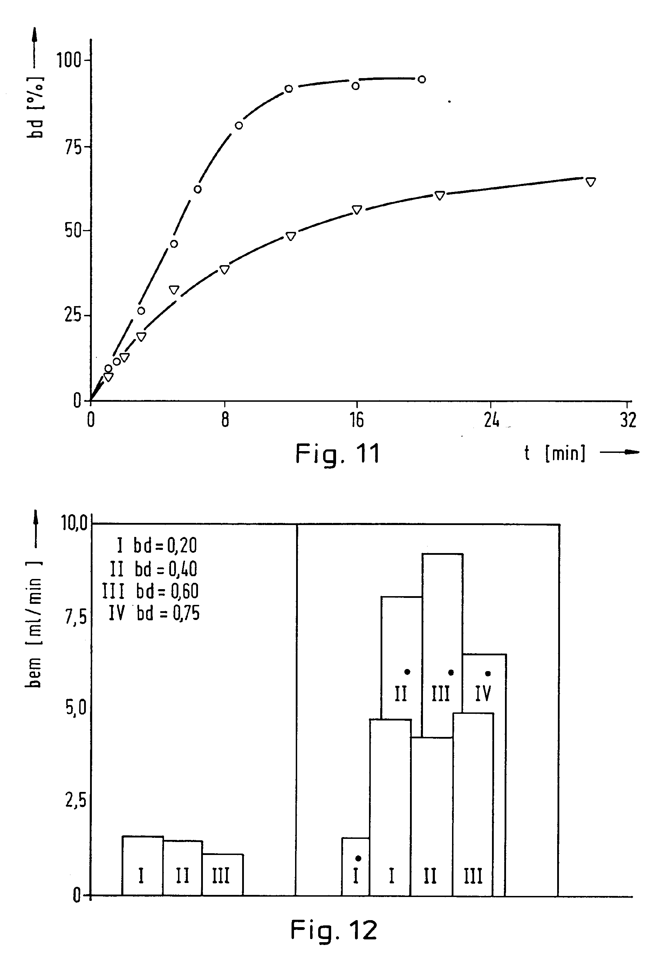

Die bei der Durchführung dieser Versuche erzielten Ergebnisse sind in den Figuren 10, 11 und 12 dargestellt. Figur 10 zeigt zwei Kurven für die kontinuierliche Emulsionsspaltung ohne Rückführung der koaleszierten Wasserphase, nämlich eine ohne Metall in der Strippingphase (untere Kurve) und eine mit 6g/l Metall (obere Kurve). Die diskontinuierliche Emulsionsspaltung gemäß Figur 11 wurde bei E = 8 kV/cm und f = 50 Hz und einer Konzentration an Amberlite LA-2 von 2 Vol.% durchgeführt (die untere Kurve ist eine Vergleichskurve ohne LA-2), während die kontinuierliche Emulsionsspaltung mit und ohne Rückführung der koaleszierten wäßrigen Phase gemäß Figur 12 bei 2 kV/1 kHz und $F_V$ = 50 ml/min durchgeführt wurde unter Verwendung einer W/O-Emulsion mit 1,75 Vol.% Span 80, 5 Vol.% Ac P 5100, Rest Kerosin als organischer Phase und 40% 2 N HCl als kointinuierlicher Phase. Im linken Teil der Figur 12 sind die Verhältnisse ohne Rückführung und im rechten Teil mit Rückführung dargestellt. Die mit Sternchen bezeichneten Felder betreffen den Fall eines veränderten Felds.

## Patentansprüche

1. Verfahren zur Abtrennung und Aufkonzentrierung von Gallium aus einer wäßrigen Lösung, die Gallium zusammen mit Aluminium, Zink und/oder Kupfer enthält, **gekennzeichnet** durch die Kombination der folgenden Merkmale:

    a) Herstellung einer Wasser-in-Öl Emulsion (W/O-Emulsion) aus einer neutralen oder alkalischen wäßrigen Phase und einer eine öllösliche Reaktionskomponente mit einem sekundären Amin enthaltenden organischen Phase in einem Homogenisator in einem Volumenverhältnis von wäßriger Phase zu organischer Phase von 2:3 bis 3:2,

    b) Dispergieren der W/O-Emulsion in der Gallium enthaltenden wäßrigen Lösung, die auf mindestens 4 Mol/l HCl eingestellt worden ist, in einem Extraktor in einem Volumenverhältnis von wäßriger Lösung zu W/O-Emulsion von 30:1 bis 10:1 bis zur Erzielung von W/O-Emulsions-Tröpfchen mit einem Durchmesser von $\leqq$ 1 mm;

    c) Abtrennung der W/O-Emulsion von dem wäßrigen Kontinuum und Durchführung einer Emulsionsspaltung in einem Reaktor mit koaxialen, zweifach isolierten Elektroden in einem angelegten Hochspannungswechselfeld mit einer Feldstärke von mindestens 0,5 kV/cm und einer Frequenz von mehr als 50 Hz unter Rückführung des ungespaltenen Anteils der W/O-Emulsion in die Stufe (b),

    d) Abtrennung der elektrokoaleszierten organischen Phase der W/O-Emulsion in einem Gravitationsabscheider und Rückführung derselben in die Stufe (a).

2. Verfahren nach Anspruch 1, dadurch gekennzeichnet, daß die elektrokoaleszierte galliumhaltige wäßrige Abstreifphase der W/O-Emulsion durch Solventextraktion, Rückextraktion mit Wasser oder einer Natriumhydroxidlösung und Elektrolyse der dabei erhaltenen wäßrigen Lösung zur Gewinnung von Gallium sowie ggfs. Zonenschmelzen zur weiteren Reinigung desselben weiterverarbeitet wird.

3. Verfahren nach Anspruch 1 oder 2, dadurch gekennzeichnet, daß das sekundäre Amin als Carrier kombiniert mit einem nichtionischen Tensid (Emulgator) verwendet wird.

4. Verfahren nach Anspruch 3, dadurch gekennzeichnet, daß 5 bis 100 mMol/l N-Lauryl-N-trialkylmethylamin (Carrier) kombiniert mit einem säurebeständigen oligomeren und nichtionischen Tensid mit einem HLB >3 und einer Molmasse > 400 g/Mol, vorzugsweise Polyisobutylen-Polybernsteinsäureanhydrid-Polyamin (Emulgator) verwendet wird.

5. Verfahren nach einem der Ansprüche 1 bis 4, dadurch gekennzeichnet, daß die wässrige Phase der W/O-Emulsion eine Wasserstoffionenkonzentration von $\leqq 10^{-2}$ Mol/l, vorzugsweise $\leqq 10^{-6}$ Mol/l aufweist.

6. Verfahren nach einem der Ansprüche 1 bis 5, dadurch gekennzeichnet, daß die Verweildauer der Emulsion im Extraktor so gewählt ist, daß die Innenphase der Emulsion mindestens 4 Mol/l HCl erreicht.

7. Verfahren nach Anspruch 6, dadurch gekennzeichnet, daß die elektrokoaleszierte wäßrige Phase der W/O-Emulsion nach der Emulsionsspaltung einer Solventextraktion unter Verwendung von mindestens 100 mMol/l N-Lauryl-N-trialkylmethylamin in einem vorwiegend aliphatischen Lösungsmittel mit hohem Flammenpunkt, vorzugsweise in Kerosin als Extraktionsmittel unterworfen wird und daß das Raffinat in die Stufe (a) zurückgeführt wird.

8. Verfahren nach einem der Ansprüche 1 bis 7, dadurch gekennzeichnet, daß der Gallium enthaltenden wäßrigen Lösung vor Durchführung der Extraktion in dem Extraktor 0,1 bis 1 Mol/l HCl und 3 bis 4 Mol/l Alkali- oder Erdalkalichlorid zugesetzt werden.

9. Verfahren nach einem der Ansprüche 1 bis 8, dadurch gekennzeichnet, daß bei der Emulsionsspaltung in der Stufe (c) ein Teilstrom der elektrokoaleszierten wäßrigen Phase der W/O-Emulsion in den Reaktor in der Stufe (c) zurückgeführt und in der zu spaltenden Emulsion bei geringem Energieeintrag dispergiert wird.

10. Verfahren nach den Ansprüchen 1 bis 9, dadurch gekennzeichnet, daß als Lösungsmittel in der organischen Phase der W/O-Emulsion Kerosin verwendet wird.

## Claims

1. Process for the separation and concentration of gallium from an aqueous solution that contains gallium together with aluminium, zinc and/or copper, which is characterised by the combination of the following features:
   a) Preparation in a homogenizer of a water-in-oil emulsion (w/o emulsion) from a neutral or alkaline aqueous phase and an organic phase that contains an oil-soluble reactant including a secondary amine, in a ratio by volume of aqueous phase to organic phase of from 2:3 to 3:2,
   b) Dispersion of the w/o emulsion in the gallium-containing aqueous solution, which has been adjusted to at least 4 mol/l of HCl, in an extractor in a ratio by volume of aqueous solution to w/o emulsion of from 30:1 to 10:1 until w/o emulsion droplets having a diameter of $\leqq 1$ mm are obtained,
   c) Removal of the w/o emulsion from the aqueous continuum and breakage of the emulsion in a reactor with coaxial, doubly insulated electrodes in an applied high voltage alternating field having a field strength of at least 0.5 kV/cm and a frequency of more than 50 Hz, the unbroken portion of the w/o emulsion being returned to step (b),
   d) Removal of the electrocoalesced organic phase of the w/o emulsion in a gravitational separator and return thereof to step (a).

2. Process according to claim 1, characterised in that the electrocoalesced gallium-containing stripped-off aqueous phase of the w/o emulsion is further processed by solvent extraction, re-extraction with water or a sodium hydroxide solution and electrolysis of the resulting aqueous solution to recover gallium and also, where appropriate, zone melting for the purpose of further purification.

3. Process according to claim 1 or 2, characterised in that the secondary amine (carrier) combined with a non-ionic surfactant (emulsifier) is used.

4. Process according to claim 3, characterised in that 5 to 100 mmol/l of N-lauryl-N-trialkylmethylamine (carrier) is used, combined with an acidresistant oligomeric and non-ionic surfactant having an HLB >3 and a molar mass > 400 g/mol, preferably polyisobutylene/polysuccinic acid anhydride/polyamine (emulsifier).

5. Process according to any one of claims 1 to 4, characterised in that the aqueous phase of the w/o emulsion has a hydrogen ion concentration of $\leqq 10^{-2}$ mol/l, preferably $\leqq 10^{-6}$ mol/l.

6. Process according to any one of claims 1 to 5, characterised in that the residence time of the emulsion in the extractor is so selected that the internal phase of the emulsion reaches at least 4 mol/l of HCl.

7. Process according to claim 6, characterised in that the electrocoalesced aqueous phase of the w/o emulsion after emulsion breakage is subjected to solvent extraction using as extraction agent at least 100 mmol/l of N-lauryl-N-trialkylmethylamine in a predominantly aliphatic solvent having a high flashpoint, preferably kerosene, and that the raffinate is returned to step (a).

8. Process according to any one of claims 1 to 7, characterised in that from 0.1 to 1 mol/l of HCl and from 3 to 4 mol/l of alkali chloride or alkaline earth chloride are added to the gallium-containing aqueous solution before carrying out the extraction in the extractor.

9. Process according to any one of claims 1 to 8, characterised in that, in the emulsion breakage in step (c), a partial flow of the electrocoalesced aqueous phase of the w/o emulsion is returned to the reactor in step (c) and dispersed with low energy input in the emulsion to be broken.

10. Process according to claims 1 to 9, characterised in that kerosene is used as the solvent in the organic phase of the w/o emulsion.


## Revendications

1. Procédé pour la séparation et la concentration de gallium à partir d'une solution aqueuse contenant, outre le gallium, de l'aluminium, du zinc et/ou du cuivre, caractérisé par la combinaison des caractéristiques suivantes:
   a) réalisation d'une émulsion eau-dans-huile (émulsion W/O) dans un homogénéisateur en partant d'une phase aqueuse neutre ou alcaline et d'une phase organique contenant un composant réactionnel soluble dans l'huile avec une amine secondaire, le rapport volumétrique entre la phase aqueuse et la phase organique étant choisi entre 2:3 et 3:2,
   b) dispersion de l'émulsion W/O dans la solution aqueuse contenant le gallium ajustée pour contenir au moins 4 mol/l HCl, dans un extracteur, le rapport volumétrique entre la solution aqueuse et l'émulsion W/O étant choisi entre 30:1 et 10:1, jusqu'à l'obtention de gouttelettes d'émulsion W/O de diamètre inférieur ou égal à 1 mm,
   c) séparation de l'émulsion W/O du milieu aqueux et mise en oeuvre d'une rupture de l'émulsion dans un réacteur à électrodes coaxiales à double isolement, créant un champ alternatif haute tension d'une intensité de champ d'au moins 0,5 kV/cm et de fréquence d'au moins 50 Hz, la partie non séparée de l'émulsion W/O étant recyclée vers l'étape (b),
   d) séparation de la phase organique rassemblée par le champ électrique de l'émulsion W/O dans un séparateur par gravitation et recyclage de cette phase vers l'étape (a).

2. Procédé selon la revendication 1, caractérisé par le fait que la phase aqueuse épuisée à partir de l'émulsion W/O contenant du gallium soumise à l'électro-coalescence est ensuite traitée par extraction par solvant, rétro-extraction par de l'eau ou une solution de soude caustique et électrolyse de la solution aqueuse ainsi obtenue en vue de récupérer le gallium, ainsi que, le cas échéant, par fusion par zones pour une purification plus poussée.

3. Procédé selon la revendication 1 ou 2, caractérisé par le fait que l'amine secondaire en tant que porteur est utilisée en combinaison avec un tensioactif non ionique (émulsifiant).

4. Procédé selon la revendication 3, caractérisé par le fait qu'on utilise entre 5 et 100 mmol/l de N-lauryl-N-trialkyl méthylamine comme porteur en combinaison avec un tensioactif non-ionique et oligomère résistant à l'acide, qui présente un HLB > 3 et une masse molaire > 400 g/mol, de préférence le polyisobutylène - polyanhydride succinique-polyamine (émulsifiant).

5. Procédé selon l'une des revendications 1 à 4, caractérisé par le fait que la phase aqueuse de l'émulsion W/O présente une concentration en ions hydrogène inférieure ou égale à $10^{-2}$ mol/l, de préférence $\leqq 10^{-6}$ mol/l.

6. Procédé selon l'une des revendications 1 à 5, caractérisé par le fait que la durée de séjour de l'émulsion dans l'extracteur est choisie pour que la phase intérieure de l'émulsion comprenne au moins 4 mol/l HCl.

7. Procédé selon la revendication 6, caractérisé par le fait que la phase aqueuse de l'émulsion W/O après électro-coalescence après la séparation de l'émulsion est soumise à une extraction par solvant en utilisant au moins 100 mmol/l de N-lauryl-N-trialkyl méthylamine dans un solvant principalement aliphatique et de point de flamme élevé, de préférence dans du kérosène comme agent d'extraction, et que le produit raffiné est recyclé vers l'étape (a).

8. Procédé selon l'une des revendications 1 à 7, caractérisé par le fait que l'on ajoute à la solution aqueuse contenant du gallium avant l'extraction dans l'extracteur entre 0,1 et 1 mol/l de HCl et entre 3 et 4 mol/l de chlorure alcalin ou alcalino-terreux.

9. Procédé selon l'une des revendications 1 à 8, caractérisé par le fait que lors de la séparation de l'émulsion dans l'étape (c) on recycle une portion de la phase aqueuse de l'émulsion W/O après électro-coalescence vers le réacteur de l'étape (c) et on disperse cette portion dans l'émulsion à séparer en veillant à une faible consommation d'énergie.

10. Procédé selon l'une des revendications 1 à 9, caractérisé par le fait qu'on utilise du kérosène comme solvant dans la phase organique de l'émulsion W/O.

W/O

Vol %

□ Kerosin
▣ Emulgator
▤ Carrier

Fig. 1

Fig. 2

1    2    3

Fig. 3a

Fig. 3b

$F_{V2} \gg F_{V3}$

Fig. 3c

Fig. 4

Fig. 5

Fig. 6

Fig. 7

LA-2 = 05 Vol.%
Ga$_0$    160 ppm
Zn$_0$ = 7000 ppm
Cu$_0$ = 7000 ppm

Fig. 8a

LA-2 = 0,5 Vol.%
Ga$_0$ =  160 ppm
Zn$_0$ = 7000 ppm
Cu$_0$ = 9000 ppm

Fig. 8b

Fig. 9

Fig. 10

Fig. 11

Fig. 12